# EUROPÄISCHE PATENTSCHRIFT

(11) **EP 4 370 399 B1**
(45) Veröffentlichungstag und Bekanntmachung des Hinweises auf die Patenterteilung: **27.08.2025**
(21) Anmeldenummer: 22734549.3
(22) Anmeldetag: 13.06.2022
(51) Int. Cl.: B61H 7/08

(54) **LAUFWERK FÜR EIN SCHIENENFAHRZEUG MIT EINER MAGNETSCHIENENBREMSE UND EINER ZENTRIERVORRICHTUNG, MAGNETSCHIENENBREMSE UND ZENTRIERVORRICHTUNG**
RUNNING GEAR FOR A RAIL VEHICLE, COMPRISING A MAGNETIC RAIL BRAKE AND A CENTRING DEVICE, MAGNETIC RAIL BRAKE AND CENTRING DEVICE
ORGANES DE ROULEMENT POUR UN VÉHICULE FERROVIAIRE, COMPRENANT UN FREIN MAGNÉTIQUE SUR RAIL ET UN DISPOSITIF DE CENTRAGE, FREIN MAGNÉTIQUE SUR RAIL ET DISPOSITIF DE CENTRAGE

(30) Priorität: 14.07.2021 DE 202021103772 U
(43) Veröffentlichungstag der Anmeldung: 22.05.2024
(73) Patentinhaber: Faiveley Transport Bochum GmbH, 44803 Bochum (DE)
(72) Erfinder: MONTUA, Sebastian, 44803 Bochum (DE); NATHAUS, Christopher, 44803 Bochum (DE); SCHULTE-FARWIG, Lasse, 44803 Bochum (DE)
(74) Vertreter: RGTH
(86) Internationale Anmeldenummer: PCT/EP2022/065986
(87) Internationale Veröffentlichungsnummer: WO 2023/285047

(56) Entgegenhaltungen:
- EP-A1- 3 403 897
- EP-A2- 1 145 929
- WO-A2-02/18190
- DE-A1- 1 903 315
- FR-A- 1 441 625
- FR-A1- 2 265 596
- FR-A1- 2 267 916

## Beschreibung

Die vorliegende Erfindung betrifft ein Laufwerk für ein Schienenfahrzeug umfassend eine Magnetschienenbremse mit einer Hebevorrichtung, einer Spurstange und einer an der Spurstange befestigten Spule, wobei die Spule und die Spurstange mittels der Hebevorrichtung zwischen einer Tieflage und einer Hochlage verfahren werden können, wobei eine Zentriervorrichtung vorgesehen ist, wobei die Zentriervorrichtung ein an der Spurstange angeordnetes Zentriermittel und eine an dem Laufwerk angeordnete Zentriermittelaufnahme umfasst, wobei das Zentriermittel in der Hochlage in die Zentriermittelaufnahme eingreift, wobei die Zentriervorrichtung ein Dämpferelement umfasst.

Ferner betrifft die vorliegende Erfindung eine Magnetschienenbremse für ein Laufwerk und eine Zentriervorrichtung für eine Magnetschienenbremse.

### Technologischer Hintergrund

Schienenfahrzeuge können eine Magnetschienenbremse aufweisen. Die Magnetschienenbremse ist meist an einem Laufwerk, insbesondere an einem Drehgestell, des Schienenfahrzeuges befestigt und umfasst eine an einer Spurstange befestigte Spule und eine Hebevorrichtung. Die Hebevorrichtung ist mit dem Laufwerk beziehungsweise dem Drehgestell einerseits und der Spurstange andererseits verbunden. Mittels der Hebevorrichtung kann die Spurstange mitsamt der Spule in eine Tieflage abgesenkt beziehungsweise in einer Hochlage angehoben werden. In der Tieflage befindet sich die Spule der Magnetschienenbremse unmittelbar über einer von dem Schienenfahrzeug befahrenen Schiene. Bei stromdurchflossener Spule wird die Spule und ein an der Magnetschienenbremse vorgesehener Schleifschuh an die Schiene gezogen. Durch die entstehende Reibung zwischen Schleifschuh und Schiene wird die Bewegungsenergie des Schienenfahrzeugs abgeführt. Zusätzlich tritt eine Wirbelstrominduktion in der Schiene auf, die eine der Bewegung des Schienenfahrzeugs entgegenwirkende Kraft erzeugt.

In der Hochlage müssen die Spurstange, die Spule und der Schleifschuh der Magnetschienenbremse zur Vermeidung von Vibrationen und Stößen sicher arretiert sein. Hierfür sind im Stand der Technik sogenannte Zentriervorrichtungen bekannt, welche meist einen an der Spurstange befestigten Zentrierkegel und eine Zentrierkegelaufnahme an dem Laufwerk umfassen. In der Hochlage greift der Zentrierkegel in die Zentrierkegelaufnahme ein, wodurch die Spurstange und die darin angeordnete Spule gegen horizontale Bewegungen gesichert wird. Um weitere durch Beschleunigungskräfte auftretende Vibrationen der Magnetschienenbremse gegenüber dem Laufwerk zu reduzieren, sind Dämpferelemente vorgesehen. Im Stand der Technik sind die Dämpferelemente innenseitig in der Zentrierkegelaufnahme angeordnet. Der Zentrierkegel liegt in der Hochlage an dem in der Zentrierkegelaufnahme angeordneten Dämpferelement an. Vibrationen der Spurstangen beziehungsweise der Magnetschienenbremse werden über den Zentrierkegel auf das Dämpferelement übertragen und absorbiert.

Aus der EP 1 145 929 A2 ist eine Betätigungseinrichtung für eine Schienenbremse an einem Drehgestell eines Schienenfahrzeuges zum Verbringen der Schienenbremse in eine erste Stellung und eine zweite Stellung mit wenigstens einem Betätigungselement bekannt, wobei die Betätigungseinrichtung eine Federeinrichtung umfasst, die die Schienenbremse in der ersten Stellung in einem vorbestimmten Mindestabstand zur Schienenoberkante hält.

Die WO 01/18190 A2 offenbart eine Vorrichtung zur mechanischen Kopplung einer Schienenbremse an einem Drehgestell eines Schienenfahrzeuges, mit einem je einer Schiene des Gleises zugeordneten elektrischen Bremsmagneten, die an je einem Magnetträger relativ zur zugeordneten Schiene heb- und senkbar angeordnet sind, und die über eine Spurhalteranordnung einen Bremsrahmen bildend in Spurbreite gehalten werden, wobei weiterhin mehrere längs zur Fahrtrichtung wirkende Mitnehmeranschläge am Drehgestell vorgesehen sind, die zur Bremskraftübertragung mit an dem Bremsrahmen vorgesehenen korrespondierenden Anschlagbereichen zusammenwirken, wobei eine aus einem harten Material bestehende Verschleißplatte über eine Federanordnung mit der Anschlagfläche des Mitnehmeranschlags oder mit dem bremsrahmenseitigen Anschlagbereich verbunden ist, um eine in Längs- und Querrichtung wirkende elastische Kopplungsstelle zu bilden.

Die FR 2 265 596 A1 offenbart eine Zentriereinrichtung für Schienenbremsmagnete an Fahrzeugen, wobei der Schienenbremsmagnet mittels einer zwischen ihm und einem Fahrzeugteil angebrachten Antriebsvorrichtung in eine untere Arbeitsstellung und eine obere Ruhestellung bewegbar ist, mit einer Anschlagvorrichtung, die am Schienenbremsmagneten und am Fahrzeugteil verteilt angeordnete Teile mit Kegelflächen bzw. Hohlkegelflächen aufweist, welche in der Ruhestellung des Schienenbremsmagneten durch gegenseitige Anlage den Schienenbremsmagneten in einer gegenüber dem Fahrzeugteil zentrierten Lage festhalten.

Die bekannten Zentriervorrichtungen für Magnetschienenbremsen von Laufwerken für Schienenfahrzeuge weisen einen verhältnismäßig komplizierten Aufbau auf und sind daher teuer in der Herstellung und Wartung.

### Darstellung der Erfindung: Aufgabe, Lösung, Vorteile

Aufgabe der vorliegenden Erfindung ist es, ein Laufwerk für ein Schienenfahrzeug umfassend eine Magnetschienenbremse bereitzustellen, wobei eine Zentriervorrichtung vorgesehen ist, mit welcher Vibrationen in hohem Maße gedämpft werden können, und welche einen kostengünstigen Aufbau aufweist.

Zur Lösung der der Erfindung zugrundeliegenden Aufgabe wird ein Laufwerk für ein Schienenfahrzeug umfassend eine Magnetschienenbremse mit einer Hebevorrichtung, einer Spurstange und einer an der Spurstange befestigten Spule vorgeschlagen, wobei die Spule und die Spurstange mittels der Hebevorrichtung zwischen einer Tieflage und einer Hochlage verfahren werden können, wobei eine Zentriervorrichtung vorgesehen ist, wobei die Zentriervorrichtung ein an der Spurstange angeordnetes Zentriermittel und eine an dem Laufwerk angeordnete Zentriermittelaufnahme umfasst, wobei das Zentriermittel in der Hochlage in die Zentriermittelaufnahme eingreift, wobei die Zentriervorrichtung ein Dämpferelement umfasst, wobei ferner vorgesehen ist, dass das Dämpferelement zwischen der Spurstange und dem Zentriermittel angeordnet ist.

Im Gegensatz zu den aus dem Stand der Technik bekannten Zentriervorrichtungen für Magnetschienenbremsen von Laufwerken für Schienenfahrzeuge ist das Dämpferelement somit nicht an der an dem Laufwerk angeordneten Zentriermittelaufnahme angeordnet, sondern befindet sich an der Spurstange, und dort insbesondere zwischen der Spurstange und dem Zentriermittel. Hierdurch wird ein kostengünstigerer Aufbau erzielt.

Die Magnetschienenbremse weist ferner bevorzugt einen Schleifschuh auf. Das Laufwerk kann ein Drehgestell sein oder umfassen.

Die Hebevorrichtung der Magnetschienenbremse ist mit einem ersten Ende an dem Laufwerk, insbesondere an dem Drehgestell, des Schienenfahrzeugs und mit einem zweiten Ende an der Spurstange befestigt. Durch Ein- und Ausfahren der Hebevorrichtung kann die Spurstange samt Spule und Schleifschuh nach unten in eine Tieflage abgesenkt beziehungsweise nach oben in eine Hochlage angehoben werden. Das Zentriermittel greift in der Hochlage von unten in die Zentriermittelaufnahme ein. Die Zentriermittelaufnahme kann auch als Flansch bezeichnet werden und kann insbesondere in Form einer in das Laufwerk oder in das Drehgestell eingesetzten Flanschscheibe ausgebildet sein.

Bevorzugt ist das Zentriermittel ein Zentrierkegel oder ein Kegelstumpf.

Unter einem Zentrierkegel wird im Rahmen der vorliegenden Erfindung ein Körper verstanden, welcher eine kegelartige Mantelfläche aufweist. Dabei kann das Zentriermittel auch ein Kegelstumpf sein.

Bevorzugt ist vorgesehen, dass das Dämpferelement ein Polymer, bevorzugt ein Terpolymer, weiter bevorzugt ein Ethylen-Propylen-Dien-Kautschuk, aufweist oder aus einem Polymer, bevorzugt einem Terpolymer, weiter bevorzugt einem Ethylen-Propylen-Dien-Kautschuk, besteht.

Derartige Polymere sind kostengünstig und weisen ein hohes Dämpfvermögen auf. Sie sind daher besonders geeignet, um eine kostengünstige und Vibrationen in einem hohen Maße dämpfende Zentriervorrichtung bereitzustellen.

Das Dämpferelement ist bevorzugt als ein scheibenförmiger oder plattenförmiger Zuschnitt ausgebildet. Insbesondere kann das Dämpferelement in einer Aufsicht kreis- oder ringförmig ausgebildet sein.

Mit weiterem Vorteil kann vorgesehen sein, dass zwischen dem Zentriermittel und der Zentriermittelaufnahme kein Dämpferelement angeordnet ist.

Gegenüber dem Stand der Technik ist es somit bevorzugt nicht vorgesehen, dass ein Dämpferelement an der Zentriermittelaufnahme angeordnet beziehungsweise befestigt ist. Mit anderen Worten liegt das Zentriermittel in der Hochlage unmittelbar an der Zentriermittelaufnahme an, ohne dass sich zwischen dem Zentriermittel und der Zentriermittelaufnahme ein Dämpferelement befindet.

Ferner ist bevorzugt vorgesehen, dass die Zentriermittelaufnahme eine zu einer Außenfläche des Zentriermittels, insbesondere zu einer Mantelfläche des Zentrierkegels oder Kegelstumpfes, komplementäre Anlagefläche aufweist.

Das Zentriermittel greift in der Hochlage bevorzugt von unten in die Zentriermittelaufnahme ein. Wenn das Zentriermittel ein Zentrierkegel oder ein Kegelstumpf ist, so weist der Zentrierkegel oder der Kegelstumpf eine Mantelfläche mit einem Flankenwinkel auf. Die Zentriermittelaufnahme, insbesondere der Flansch oder die Flanschscheibe, weist dann auf der Unterseite eine zu der Mantelfläche komplementäre Anlagefläche auf, welche den gleichen Flankenwinkel hat.

Weiter bevorzugt kann vorgesehen sein, dass das Zentriermittel aus einem Polymer besteht.

Versuche der Anmelderin haben gezeigt, dass ein aus einem Polymer bestehendes Zentriermittel kostengünstig herzustellen ist, und eine zu einem Zentriermittel aus Metall äquivalente Arretiersicherheit bietet. Darüber hinaus kann ein aus einem Polymer bestehendes Zentriermittel selbst als Dämpferelement wirken.

Weiter bevorzugt kann vorgesehen sein, dass das Zentriermittel ein Loch aufweist und dass das Dämpferelement eine fluchtend mit dem Loch angeordnete Öffnung aufweist, wobei das Zentriermittel mittels eines durch das Loch und die Öffnung geführten Befestigungsmittels, insbesondere einer Schraube, an der Spurstange befestigt, insbesondere mit der Spurstange verschraubt, ist.

Das Loch ist bevorzugt zentral in dem Zentriermittel angeordnet und durchdringt dieses durchgehend von oben nach unten. Das Loch kann auch als Bohrung, Durchbruch oder Kanal bezeichnet werden. Das Loch ist weiter bevorzugt in etwa kreisförmig oder rund ausgebildet. Das Dämpferelement weist eine Öffnung auf. Ist das Dämpferelement im Wesentlichen als eine Scheibe, beispielsweise aus einem Ethylen-Propylen-Dien-Kautschuk, ausgebildet, so ist die Öffnung des Dämpferelements bevorzugt zentral in dem Dämpferelement ausgebildet. Das Dämpferelement, welches zwischen der Spurstange und dem Zentriermittel angeordnet ist, ist insbesondere an einer Unterseite des Zentriermittels und an einer Oberseite der Spurstange angeordnet. Durch die fluchtend mit dem Loch des Zentriermittels ausgerichtete Öffnung kann ein Befestigungsmittel bevorzugt von einer Oberseite durch das Zentriermittel und das Dämpferelement geführt und an der unterhalb des Dämpferelementes angeordneten Spurstange befestigt sein. Wenn das Befestigungsmittel als eine Schraube ausgebildet ist, ist die Schraube mit der Spurstange verschraubt. Hierdurch werden das Zentriermittel und das zwischen dem Zentriermittel und der Spurstange angeordnete Dämpferelement mit der Spurstange verschraubt.

Bevorzugt ist das Befestigungsmittel eine Schraube, insbesondere eine M16-Schraube.

Mit weiterem Vorteil kann vorgesehen sein, dass das Zentriermittel eine Aufnahme aufweist, wobei ein Kopf des Befestigungsmittels, insbesondere ein Kopf der Schraube, in der Aufnahme angeordnet ist.

Die Aufnahme, welche auch als Ausnehmung oder Vertiefung bezeichnet werden kann, ist insbesondere in der Oberseite des bevorzugt als Kegelstumpf ausgebildeten Zentriermittels angeordnet. Das Befestigungsmittel, insbesondere die Schraube, ist von oben durch das Loch des Zentriermittels und die Öffnung des darunterliegenden Dämpferelements geführt und an der darunterliegenden Spurstange befestigt. Der Kopf des Befestigungsmittels, insbesondere der Schraube, ist dann innerhalb der Aufnahme des Zentriermittels versenkt angeordnet.

Dabei kann vorgesehen sein, dass in der Aufnahme unterhalb des Kopfes des Befestigungsmittels eine Unterlegscheibe angeordnet ist.

Über die Unterlegscheibe wird eine Vorspannkraft des Befestigungsmittels auf das Zentriermittel und das Dämpferelement übertragen.

Ferner bevorzugt kann vorgesehen sein, dass die Zentriervorrichtung eine Hülse umfasst, wobei die Hülse in dem Loch des Zentriermittels angeordnet ist, wobei weiter bevorzugt die Hülse in der Öffnung des Dämpferelements angeordnet ist.

Mit anderen Worten ist die Hülse in dem Loch des Zentriermittels angeordnet und kann mit einem unteren Abschnitt auch in der Öffnung des Dämpferelementes angeordnet sein.

Dabei kann eine Funktion der Hülse die Übertragung der Schraubenvorspannkraft sein, wobei die Schraubenvorspannkraft komplett auf die Hülse übertragen oder teilweise auf Hülse und Zentriermittel mit Dämpferelement aufgeteilt wird.

Ferner kann vorgesehen sein, dass eine axiale Erstreckung der Hülse gleich oder kleiner ist als die Summe der axialen Erstreckungen des Lochs des Zentriermittels und der Öffnung des Dämpferelements.

Dabei kann bevorzugt vorgesehen sein, dass die Hülse mit einem radialen Spiel in dem Loch des Zentriermittels angeordnet ist.

Durch das radiale Spiel kann ein Toleranzausgleich bei der Montage ausgeglichen werden.

Mit Vorteil beträgt das radiale Spiel zwischen 1 mm und 5 mm, bevorzugt ca. 3 mm.

Weiter bevorzugt ist die Hülse ohne ein radiales Spiel in der Öffnung des Dämpferelements angeordnet.

Bevorzugt ist vorgesehen, dass das Zentriermittel an einer Basis einen Durchmesser von 80 mm bis 100 mm, bevorzugt von ca. 90 mm, aufweist.

Weiter bevorzugt kann vorgesehen sein, dass das Zentriermittel eine Höhe von 20 mm bis 40 mm, bevorzugt von 26 mm bis 34 mm, aufweist.

Bevorzugt kann vorgesehen sein, dass das Dämpferelement einen Durchmesser von 90 mm bis 110 mm, bevorzugt von 95 mm bis 96 mm, aufweist.

Mit noch weiterem Vorteil kann vorgesehen sein, dass das Dämpferelement eine Höhe von 1 mm bis 5 mm, bevorzugt von 2 mm bis 4 mm, aufweist.

Bevorzugt kann vorgesehen sein, dass das Befestigungsmittel, insbesondere die Schraube, eine statische Vorspannkraft von weniger als 75 kN, bevorzugt von weniger als 70 kN, weiter bevorzugt von weniger als 65 kN, auf das Zentriermittel ausübt.

Eine weitere Lösung der der Erfindung zugrundeliegenden Aufgabe besteht in einer Magnetschienenbremse für ein vorbeschriebenes Laufwerk.

Sämtliche im Zusammenhang mit dem Laufwerk erläuterten Funktionen, Merkmale und Ausführungsformen können in entsprechender Weise auch auf die Magnetschienenbremse übertragen werden.

Eine noch weitere Lösung der der Erfindung zugrundeliegenden Aufgabe besteht in der Bereitstellung einer Zentriervorrichtung für eine Magnetschienenbremse.

Sämtliche im Zusammenhang mit dem Laufwerk erläuterten Funktionen, Merkmale und Ausführungsformen können in entsprechender Weise auch auf die Zentriervorrichtung übertragen werden.

Eine noch weitere Lösung der erfindungsgemäßen Aufgabe besteht in der Bereitstellung eines Zentriermittels für eine Zentriervorrichtung.

Sämtliche im Zusammenhang mit dem Laufwerk erläuterten Vorteile, Merkmale, Ausführungsformen und Funktionen können in entsprechender Weise auf das Zentriermittel übertragen werden.

### Kurze Beschreibung der Figuren

Die Erfindung wird nachstehend näher anhand der beigefügten Figuren erläutert. Es zeigen
- Fig. 1: einen Teil eines Laufwerks für ein Schienenfahrzeug,
- Fig. 2a: eine Querschnittsansicht einer aus dem Stand der Technik bekannten Zentriervorrichtung,
- Fig. 2b: eine Explosionsdarstellung der aus dem Stand der Technik bekannten Zentriervorrichtung,
- Fig. 3a: eine Querschnittsansicht einer Zentriervorrichtung gemäß der Erfindung,
- Fig. 3b: eine Explosionsdarstellung der Zentriervorrichtung gemäß der Erfindung.

### Ausführliche Beschreibung der Figuren

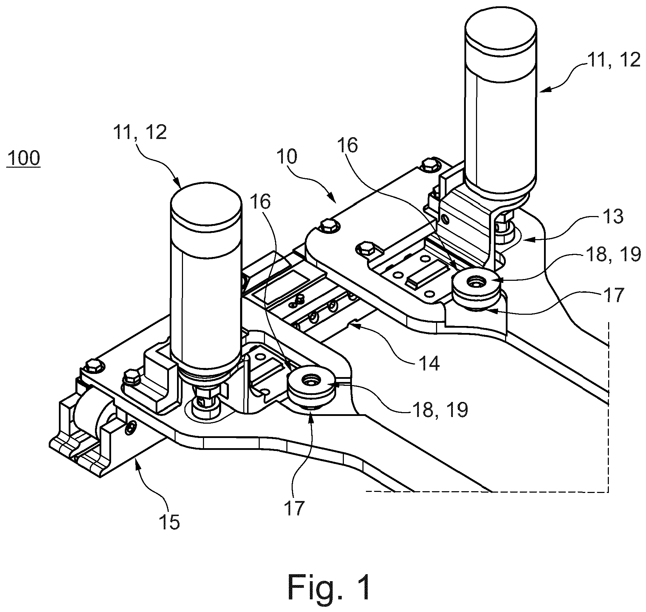

Fig. 1 zeigt eine Magnetschienenbremse 10 eines Laufwerks 100 für ein nicht näher dargestelltes Schienenfahrzeug. Die Magnetschienenbremse 10 umfasst eine Hebevorrichtung 11, wobei die Hebevorrichtung 11 durch zwei Pneumatikzylinder 12 realisiert ist. Die Magnetschienenbremse 10 weist ferner eine Spurstange 13 auf. An der Spurstange 13 sind eine Spule 14 und mindestens ein Schleifschuh 15 befestigt. In der dargestellten Position sind die Pneumatikzylinder 12 der Hebevorrichtung 11 eingefahren, sodass die Spurstange 13 der Magnetschienenbremse 10 in einer Hochlage angeordnet ist. Das Laufwerk 100 beziehungsweise die Magnetschienenbremse 10 weist ferner eine Zentriervorrichtung 16 auf. Die Zentriervorrichtung 16 umfasst Zentriermittel 17, welche an der Spurstange 13 befestigt sind. Ferner weist die Zentriervorrichtung 16 Zentriermittelaufnahmen 18 auf, welche als Flanschscheiben 19 ausgebildet sind. Die Zentriermittelaufnahmen 18 sind an aus Gründen der Übersichtlichkeit nicht näher dargestellten Trägern des Laufwerks 100 befestigt.

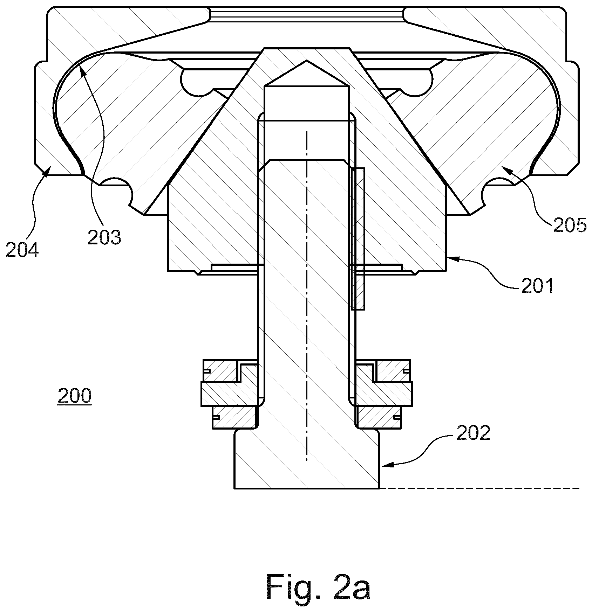

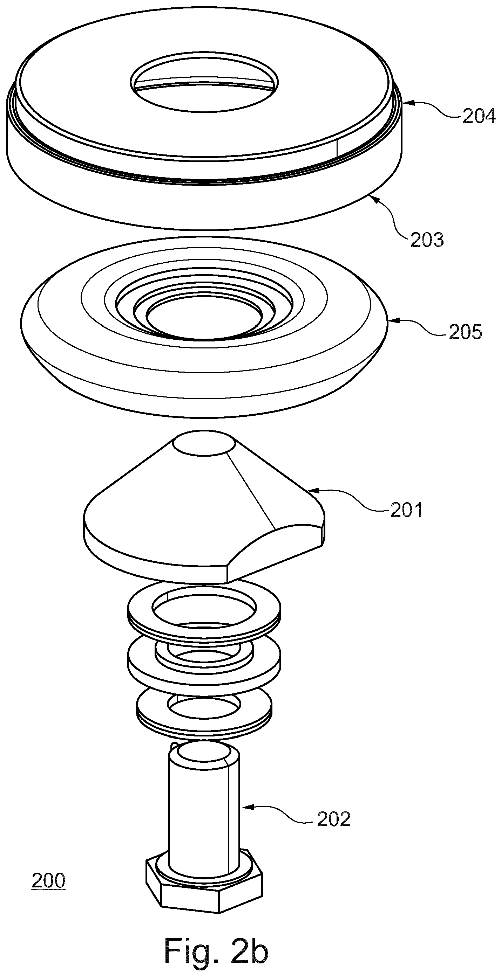

Fig. 2a und 2b zeigen eine aus dem Stand der Technik bekannte Zentriervorrichtung 200 in einer Querschnittsansicht (Fig. 2a) und in einer Explosionsdarstellung (Fig. 2b). Die bekannte Zentriervorrichtung 200 umfasst einen Zentrierkegel 201, welcher mittels einer von unten durch eine nicht dargestellte Spurstange geführte Schraube 202 mit der Spurstange verbunden ist. Auf einer Unterseite 203 eines Zentrierflansches 204 ist ein in etwa torusförmiges Dämpferelement 205 angeordnet. In der dargestellten Hochlage fährt der Zentrierkegel 201 von unten in den Zentrierflansch 204 ein und liegt, wie in Fig. 2a gezeigt, bündig an dem Dämpferelement 205 an.

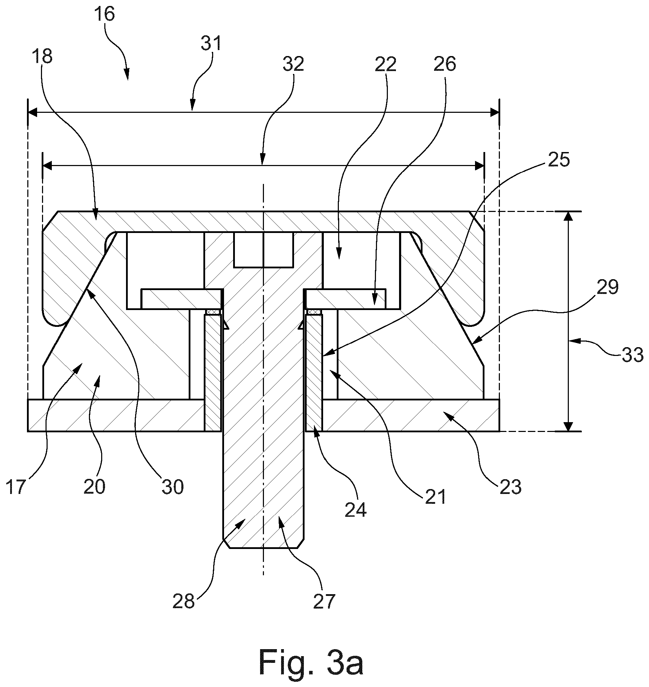

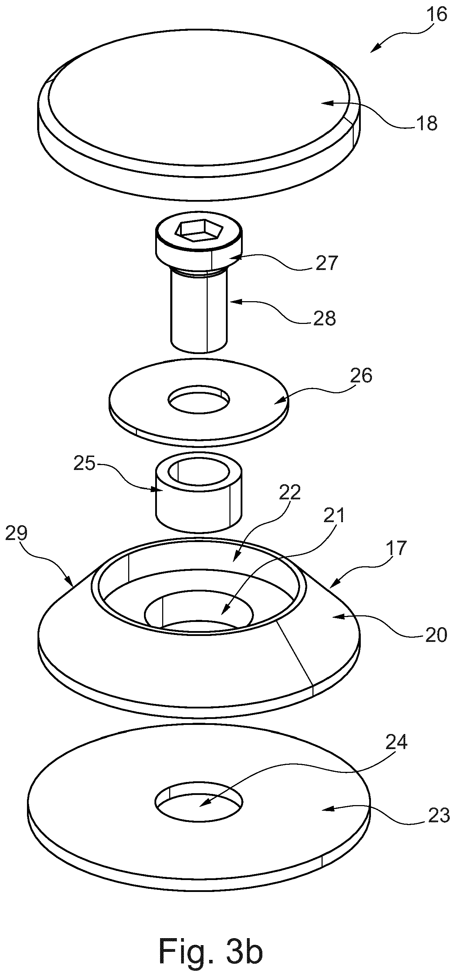

Fig. 3a und 3b zeigen eine Zentriervorrichtung 16 im Einklang mit der vorliegenden Erfindung. Die Zentriervorrichtung 16 weist einen Zentriermittel 17 auf, welches als Kegelstumpf 20 ausgebildet ist. Der Zentriermittel 17 ist aus einem Polymer gefertigt. Der Zentriermittel 17 beziehungsweise der Kegelstumpf 20 weist ein zentrales Loch 21 sowie eine Aufnahme 22 im Bereich der Oberseite auf. Unterhalb des Zentriermittels 17 ist ein scheibenförmiges Dämpferelement 23 angeordnet. Das Dämpferelement 23 besteht aus einem Ethylen-Propylen-Dien-Kautschuk. Wie in der Querschnittsdarstellung der Fig. 2a gezeigt, ist durch das Loch 21 des Zentriermittels 17 und durch eine zentrale Öffnung 24 im Dämpferelement 23 eine Hülse 25 geführt, welche im Loch 21 des Zentriermittels 17 mit einem radialen Spiel angeordnet ist. In der Öffnung 24 des Dämpferelements 23 liegt die Hülse 25 bündig an. Oberhalb der Hülse 25 ist in der Aufnahme 22 eine Unterlegscheibe 26 angeordnet. Mittels eines als Schraube 27 ausgebildeten Befestigungsmittels 28, welches von oben durch die Hülse 25 geführt ist, wird der Zentriermittel 17 mit der Spurstange 13 nach Fig. 1 verschraubt. Die Zentriermittelaufnahme 18 wird an einem Träger des Laufwerkes 100 befestigt. Das als Kegelstumpf 20 ausgebildete Zentriermittel 17 weist eine Mantelfläche 29 auf, welche in der Hochlage der Magnetschienenbremse 10 an einer innenseitigen, zu der Mantelfläche 29 komplementären Anlagefläche 30 der Zentriermittelaufnahme 18 anliegt. Der Durchmesser 31 des Dämpferelementes 23 beträgt ca. 96 mm. Der Durchmesser 32 der Zentriermittelaufnahme 18 sowie des Zentriermittels 17 beträgt in etwa 90 mm. Der gesamte Aufbau von Zentriermittelaufnahme 18, Zentriermittel 17 und Dämpferelement 23 weist eine Höhe 33 von etwa 34 mm auf.

### Liste der Bezugszeichen

- 100: Laufwerk
- 10: Magnetschienenbremse
- 11: Hebevorrichtung
- 12: Pneumatikzylinder
- 13: Spurstange
- 14: Spule
- 15: Schleifschuh
- 16: Zentriervorrichtung
- 17: Zentriermittel
- 18: Zentriermittelaufnahmen
- 19: Flanschscheiben
- 20: Kegelstumpf
- 21: Loch
- 22: Aufnahme
- 23: Dämpferelement
- 24: Öffnung
- 25: Hülse
- 26: Unterlegscheibe
- 27: Schraube
- 28: Befestigungsmittels
- 29: Mantelfläche
- 30: Anlagefläche
- 31: Durchmesser
- 32: Durchmesser
- 33: Höhe

- 200: Zentriervorrichtung
- 201: Zentrierkegel
- 202: Schraube
- 203: Unterseite
- 204: Zentrierflansch
- 205: Dämpferelement

## Patentansprüche

1. Laufwerk (100) für ein Schienenfahrzeug, umfassend eine Magnetschienenbremse (10) mit einer Hebevorrichtung (11), einer Spurstange (13) und einer an der Spurstange (13) befestigten Spule (14), wobei die Spule (14) und die Spurstange (13) mittels der Hebevorrichtung (11) zwischen einer Tieflage und einer Hochlage verfahren werden können, wobei eine Zentriervorrichtung (16) vorgesehen ist, wobei die Zentriervorrichtung (16) ein an der Spurstange (13) angeordnetes Zentriermittel (17) und eine an dem Laufwerk angeordnete Zentriermittelaufnahme (18) umfasst, wobei das Zentriermittel (17) in der Hochlage in die Zentriermittelaufnahme (18) eingreift, wobei die Zentriervorrichtung (16) ein Dämpferelement (23) umfasst, **dadurch gekennzeichnet, dass** das Dämpferelement (23) zwischen der Spurstange (13) und dem Zentriermittel (17) angeordnet ist.

2. Laufwerk (100) nach Anspruch 1, **dadurch gekennzeichnet, dass** das Zentriermittel (17) ein Zentrierkegel oder ein Kegelstumpf (20) ist.

3. Laufwerk (100) nach Anspruch 1 oder 2, **dadurch gekennzeichnet, dass** das Dämpferelement (23) ein Polymer, bevorzugt ein Terpolymer, weiter bevorzugt ein Ethylen-Propylen-Dien-Kautschuk, aufweist oder aus einem Polymer, bevorzugt einem Terpolymer, weiter bevorzugt einem Ethylen-Propylen-Dien-Kautschuk, besteht, und/oder dass das Dämpferelement (23) ein scheibenförmiger oder plattenförmiger Zuschnitt ist.

4. Laufwerk (100) nach einem der vorgenannten Ansprüche, **dadurch gekennzeichnet, dass** zwischen dem Zentriermittel (17) und der Zentriermittelaufnahme (18) kein Dämpferelement (23) angeordnet ist.

5. Laufwerk (100) nach einem der vorgenannten Ansprüche, **dadurch gekennzeichnet, dass** die Zentriermittelaufnahme (18) eine zu einer Außenfläche des Zentriermittels (16), insbesondere zu einer Mantelfläche (29) des Zentrierkegels oder Kegelstumpfs (20), komplementäre Anlagefläche (30) aufweist.

6. Laufwerk (100) nach einem der vorgenannten Ansprüche, **dadurch gekennzeichnet, dass** das Zentriermittel (17) aus einem Polymer besteht.

7. Laufwerk (100) nach einem der vorgenannten Ansprüche, **dadurch gekennzeichnet, dass** das Zentriermittel (17) ein Loch (21) aufweist und dass das Dämpferelement (23) eine fluchtend mit dem Loch (21) angeordnete Öffnung (24) aufweist, wobei das Zentriermittel (17) mittels eines durch das Loch (21) und die Öffnung (24) geführten Befestigungsmittels (28), insbesondere einer Schraube (27), an der Spurstange (13) befestigt, insbesondere mit der Spurstange (13) verschraubt, ist, wobei das Befestigungsmittel (28) bevorzugt eine Schraube (27), insbesondere eine M16-Schraube, ist.

8. Laufwerk (100) nach Anspruch 7, **dadurch gekennzeichnet, dass** das Zentriermittel (17) eine Aufnahme (22) aufweist, wobei ein Kopf des Befestigungsmittels (28), insbesondere ein Kopf der Schraube (27), in der Aufnahme (22) angeordnet ist, wobei bevorzugt in der Aufnahme (22) unterhalb des Kopfes des Befestigungsmittels (28) eine Unterlegscheibe (26) angeordnet ist.

9. Laufwerk (100) nach Anspruch 7 oder 8, **dadurch gekennzeichnet, dass** die Zentriervorrichtung (16) eine Hülse (25) umfasst, wobei die Hülse (25) in dem Loch (21) des Zentriermittels (16) angeordnet ist, wobei bevorzugt die Hülse (25) in der Öffnung (24) des Dämpferelements (23) angeordnet ist, wobei weiter bevorzugt die Hülse (25) mit einem radialen Spiel in dem Loch (21) des Zentriermittels (16) angeordnet ist, wobei insbesondere bevorzugt das radiale Spiel zwischen 1 mm und 5 mm, besonders bevorzugt ca. 3 mm, beträgt.

10. Laufwerk (100) nach Anspruch 9, **dadurch gekennzeichnet, dass** eine axiale Erstreckung der Hülse (25) gleich oder kleiner ist als die Summe der axialen Erstreckungen des Lochs (21) des Zentriermittels (16) und der Öffnung (24) des Dämpferelements (23).

11. Laufwerk (100) nach einem der vorgenannten Ansprüche, **dadurch gekennzeichnet, dass** das Zentriermittel (17) an einer Basis einen Durchmesser (32) von 80 mm bis 100 mm, bevorzugt von ca. 90 mm, aufweist, und/oder dass das Zentriermittel (17) eine Höhe von 20 mm bis 40 mm, bevorzugt von 26 bis 34 mm, aufweist, und/oder dass das Dämpferelement (23) einen Durchmesser (31) von 90 mm bis 110 mm, bevorzugt von 95 mm bis 96 mm, aufweist, und/oder dass das Dämpferelement (23) eine Höhe von 1 mm bis 5 mm, bevorzugt von 2 mm bis 4 mm, aufweist.

12. Laufwerk (100) nach einem der Ansprüche 7 bis 11, **dadurch gekennzeichnet, dass** das Befestigungsmittel (28), insbesondere die Schraube (27), eine statische Vorspannkraft von weniger als 75 kN, bevorzugt von weniger als 70 kN, weiter bevorzugt von weniger als 65 kN, auf das Zentriermittel (17) ausübt.

13. Magnetschienenbremse (10) für ein Laufwerk (100) nach einem der vorgenannten Ansprüche, mit einer Hebevorrichtung (11), einer Spurstange (13) und einer an der Spurstange (13) befestigten Spule (14), wobei die Spule (14) und die Spurstange (13) mittels der Hebevorrichtung (11) zwischen einer Tieflage und einer Hochlage verfahren werden können, wobei eine Zentriervorrichtung (16) vorgesehen ist, wobei die Zentriervorrichtung (16) ein an der Spurstange (13) angeordnetes Zentriermittel (17) und eine zur Anordnung an dem Laufwerk vorgesehene Zentriermittelaufnahme (18) umfasst, wobei das Zentriermittel (17) in der Hochlage in die Zentriermittelaufnahme (18) eingreift, wobei die Zentriervorrichtung (16) ein Dämpferelement (23) umfasst, **dadurch gekennzeichnet, dass** das Dämpferelement (23) zwischen der Spurstange (13) und dem Zentriermittel (17) angeordnet ist.

14. Zentriervorrichtung (16) für eine Magnetschienenbremse (10) nach Anspruch 13,wobei die Zentriervorrichtung ein zur Anordnung an einer Spurstange (13) der Magnetschienenbremse vorgesehenes Zentriermittel (17) und eine zur Anordnung an dem Laufwerk nach einem der Ansprüche 1 bis 12 vorgesehene Zentriermittelaufnahme (18) aufweist, wobei das Zentriermittel (17) in der Hochlage in die Zentriermittelaufnahme (18) eingreift, wobei die Zentriervorrichtung ein Dämpferelement (23) umfasst, **dadurch gekennzeichnet, dass** das Dämpferelement (23) zur Anordnung zwischen der Spurstange (13) der Magnetschienenbremse und dem Zentriermittel (17) vorgesehen ist.

15. Zentriervorrichtung (16) nach Anspruch 14, **dadurch gekennzeichnet, dass** das Zentriermittel (17) ein Zentrierkegel oder ein Kegelstumpf (20) ist, und dass das Zentriermittel (17) ein Loch (21) aufweist.

## Claims

1. Running gear (100) for a rail vehicle, comprising a magnetic rail brake (10) with a lifting device (11), a track rod (13) and a coil (14) attached to the track rod (13), wherein the coil (14) and the track rod (13) can be moved between a low position and a high position by means of the lifting device (11), wherein a centering device (16) is provided, wherein the centering device (16) comprises a centering means (17) arranged on the track rod (13) and a centering means receptacle (18) arranged on the running gear, wherein the centering means (17) engages in the centering means receptacle (18) in the high position, wherein the centering device (16) comprises a damping element (23), **characterized in that** the damping element (23) is arranged between the track rod (13) and the centering means (17).

2. Running gear (100) according to claim 1, **characterized in that** the centering means (17) is a centering cone or a truncated cone (20).

3. Running gear (100) according to claim 1 or 2, **characterized in that** the damping element (23) has a polymer, preferably a terpolymer, more preferably an ethylene-propylene-diene rubber, or consists of a polymer, preferably a terpolymer, more preferably an ethylene-propylene-diene rubber, and/or **in that** the damping element (23) is a disc-shaped or plate-shaped blank.

4. Running gear (100) according to one of the preceding claims, **characterized in that** no damping element (23) is arranged between the centering means (17) and the centering means receptacle (18).

5. Running gear (100) according to one of the preceding claims, **characterized in that** the centering means receptacle (18) has a contact surface (30) which is complementary to an outer surface of the centering means (16), in particular to a lateral surface (29) of the centering cone or truncated cone (20) .

6. Running gear (100) according to one of the preceding claims, **characterized in that** the centering means (17) consists of a polymer.

7. Running gear (100) according to one of the preceding claims, **characterized in that** the centering means (17) has a hole (21) and **in that** the damping element (23) has an opening (24) arranged in alignment with the hole (21), wherein the centering means (17) is fastened to the track rod (13), in particular screwed to the track rod (13), by means of a fastening means (28), in particular a screw (27) guided through the hole (21) and the opening (24), wherein the fastening means (28) is preferably a screw (27), in particular an M16 screw.

8. Running gear (100) according to claim 7, **characterized in that** the centering means (17) has a receptacle (22), wherein a head of the fastening means (28), in particular a head of the screw (27), is arranged in the receptacle (22), wherein preferably a washer (26) is arranged in the receptacle (22) below the head of the fastening means (28).

9. Running gear (100) according to claim 7 or 8, **characterized in that** the centering device (16) comprises a sleeve (25), wherein the sleeve (25) is arranged in the hole (21) of the centering means (16), wherein preferably the sleeve (25) is arranged in the opening (24) of the damping element (23), wherein further preferably the sleeve (25) is arranged with a radial clearance in the hole (21) of the centering means (16), wherein in particular preferably the radial clearance is between 1 mm and 5 mm, particularly preferably approx. 3 mm.

10. Running gear (100) according to claim 9, **characterized in that** an axial extension of the sleeve (25) is equal to or smaller than the sum of the axial extensions of the hole (21) of the centering means (16) and the opening (24) of the damping element (23).

11. Running gear (100) according to one of the preceding claims, **characterized in that** the centering means (17) has a diameter (32) at a base of from 80 mm to 100 mm, preferably of about 90 mm, and/or that the centering means (17) has a height of from 20 mm to 40 mm, preferably from 26 to 34 mm, and/or that the damping element (23) has a diameter (31) of from 90 mm to 110 mm, preferably from 95 mm to 96 mm, and/or that the damping element (23) has a height of from 1 mm to 5 mm, preferably from 2 mm to 4 mm.

12. Running gear (100) according to one of claims 7 to 11, **characterized in that** the fastening means (28), in particular the screw (27), exerts a static pre-tensioning force of less than 75 kN, preferably of less than 70 kN, more preferably of less than 65 kN, on the centering means (17).

13. Magnetic rail brake (10) for a running gear (100) according to one of the preceding claims, with a lifting device (11), a track rod (13) and a coil (14) fastened to the track rod (13), wherein the coil (14) and the track rod (13) can be moved between a low position and a high position by means of the lifting device (11), wherein a centering device (16) is provided, wherein the centering device (16) comprises a centering means (17) arranged on the track rod (13) and a centering means receptacle (18) provided for arrangement on the running gear, wherein the centering means (17) engages in the centering means receptacle (18) in the high position, wherein the centering device (16) comprises a damping element (23), **characterized in that** the damping element (23) is arranged between the track rod (13) and the centering means (17).

14. Centering device (16) for a magnetic rail brake (10) according to claim 13, wherein the centering device has a centering means (17) provided for arrangement on a track rod (13) of the magnetic rail brake and a centering means receptacle (18) provided for arrangement on the running gear according to one of claims 1 to 12, wherein the centering means (17) engages in the centering means receptacle (18) in the high position, wherein the centering device comprises a damping element (23), **characterized in that** the damping element (23) is provided for arrangement between the track rod (13) of the magnetic rail brake and the centering means (17).

15. Centering device (16) according to claim 14, **characterized in that** the centering means (17) is a centering cone or a truncated cone (20), and **in that** the centering means (17) has a hole (21).

## Revendications

1. Mécanisme de roulement (100) pour un véhicule ferroviaire, comprenant un frein magnétique sur rail (10) avec un dispositif de levage (11), une barre d'accouplement (13) et une bobine (14) fixée à la barre d'accouplement (13), la bobine (14) et la barre d'accouplement (13) pouvant être déplacées entre une position basse et une position haute au moyen du dispositif de levage (11), un dispositif de centrage (16) étant prévu, le dispositif de centrage (16) comprenant un moyen de centrage (17) disposé sur la barre d'accouplement (13) et un logement de moyen de centrage (18) disposé sur le mécanisme de roulement, le moyen de centrage (17) s'engageant dans le logement de moyen de centrage (18) en position haute, le dispositif de centrage (16) comprenant un élément amortisseur (23), **caractérisé en ce que** l'élément amortisseur (23) est disposé entre la barre d'accouplement (13) et le moyen de centrage (17) .

2. Mécanisme de roulement (100) selon la revendication 1, **caractérisé en ce que** le moyen de centrage (17) est un cône de centrage ou un cône tronqué (20).

3. Mécanisme de roulement (100) selon la revendication 1 ou 2, **caractérisé en ce que** l'élément amortisseur (23) présente un polymère, de préférence un terpolymère, de préférence encore un caoutchouc éthylène-propylène-diène, ou est constitué d'un polymère, de préférence un terpolymère, de préférence encore un caoutchouc éthylène-propylène-diène, et/ou **en ce que** l'élément amortisseur (23) est une coupe en forme de disque ou de plaque.

4. Mécanisme de roulement (100) selon l'une des revendications susmentionnées, **caractérisé en ce qu'**aucun élément amortisseur (23) n'est disposé entre le moyen de centrage (17) et le logement du moyen de centrage (18).

5. Mécanisme de roulement (100) selon l'une des revendications précitées, **caractérisé en ce que** le logement du moyen de centrage (18) présente une surface d'appui (30) complémentaire à une surface extérieure du moyen de centrage (16), en particulier à une surface d'enveloppe (29) du cône de centrage ou du cône tronqué (20) .

6. Mécanisme de roulement (100) selon l'une des revendications précédentes, **caractérisé en ce que** le moyen de centrage (17) est constitué d'un polymère.

7. Mécanisme de roulement (100) selon l'une des revendications précédentes, **caractérisé en ce que** le moyen de centrage (17) présente un trou (21) et **en ce que** l'élément amortisseur (23) présente une ouverture (24) alignée avec le trou (21), le moyen de centrage (17) étant fixé à la barre d'accouplement (13), en particulier vissé à la barre d'accouplement (13), au moyen d'un moyen de fixation (28), en particulier une vis (27), guidé à travers le trou (21) et l'ouverture (24), le moyen de fixation (28) étant de préférence une vis (27), en particulier une vis M16.

8. Mécanisme de roulement (100) selon la revendication 7, **caractérisé en ce que** le moyen de centrage (17) présente un logement (22), une tête du moyen de fixation (28), notamment une tête de la vis (27), étant disposée dans le logement (22), une rondelle (26) étant de préférence disposée dans le logement (22) en dessous de la tête du moyen de fixation (28).

9. Mécanisme de roulement (100) selon la revendication 7 ou 8, **caractérisé en ce que** le dispositif de centrage (16) comprend un manchon (25), le manchon (25) étant disposé dans le trou (21) du moyen de centrage (16), de préférence le manchon (25) étant disposé dans l'ouverture (24) de l'élément amortisseur (23), de préférence encore, le manchon (25) est disposée avec un jeu radial dans le trou (21) du moyen de centrage (16), le jeu radial étant de préférence compris entre 1 mm et 5 mm, de préférence encore d'environ 3 mm.

10. Mécanisme de roulement (100) selon la revendication 9, **caractérisé en ce qu'**une extension axiale du manchon (25) est égale ou inférieure à la somme des extensions axiales du trou (21) du moyen de centrage (16) et de l'ouverture (24) de l'élément amortisseur (23).

11. Mécanisme de roulement (100) selon l'une des revendications précédentes, **caractérisé en ce que** le moyen de centrage (17) présente à une base un diamètre (32) de 80 mm à 100 mm, de préférence d'environ 90 mm. 90 mm, et/ou que le moyen de centrage (17) présente une hauteur de 20 mm à 40 mm, de préférence de 26 à 34 mm, et/ou que l'élément amortisseur (23) présente un diamètre (31) de 90 mm à 110 mm, de préférence de 95 mm à 96 mm, et/ou que l'élément amortisseur (23) présente une hauteur de 1 mm à 5 mm, de préférence de 2 mm à 4 mm.

12. Mécanisme de roulement (100) selon l'une des revendications 7 à 11, **caractérisé en ce que** le moyen de fixation (28), notamment la vis (27), exerce sur le moyen de centrage (17) une force de précontrainte statique inférieure à 75 kN, de préférence inférieure à 70 kN, plus préférentiellement inférieure à 65 kN.

13. Frein magnétique sur rail (10) pour un mécanisme de roulement (100) selon l'une des revendications précédentes, comprenant un dispositif de levage (11), une barre d'accouplement (13) et une bobine (14) fixée à la barre d'accouplement (13), la bobine (14) et la barre d'accouplement (13) pouvant être déplacées entre une position basse et une position haute au moyen du dispositif de levage (11), un dispositif de centrage (16) étant prévu, le dispositif de centrage (16) comprenant un moyen de centrage (17) disposé sur la barre d'accouplement (13) et un logement de moyen de centrage (18) prévu pour être disposé sur le mécanisme de roulement, le moyen de centrage (17) s'engageant dans le logement de moyen de centrage (18) dans la position haute, le dispositif de centrage (16) comprenant un élément amortisseur (23), **caractérisé en ce que** l'élément amortisseur (23) est disposé entre la barre d'accouplement (13) et le moyen de centrage (17).

14. Dispositif de centrage (16) pour un frein magnétique sur rail (10) selon la revendication 13, dans lequel le dispositif de centrage comprend un moyen de centrage (17) prévu pour être disposé sur une barre d'accouplement (13) du frein magnétique sur rail et un logement de moyen de centrage (18) prévu pour être disposé sur le mécanisme de roulement selon l'une des revendications 1 à 12, le moyen de centrage (17) s'engageant dans le logement de moyen de centrage (18) en position haute, le dispositif de centrage comprenant un élément amortisseur (23), **caractérisé en ce que** l'élément amortisseur (23) est prévu pour être disposé entre la barre d'accouplement (13) du frein à rail magnétique et le moyen de centrage (17).

15. Dispositif de centrage (16) selon la revendication 14, **caractérisé en ce que** le moyen de centrage (17) est un cône de centrage ou un cône tronqué (20), et **en ce que** le moyen de centrage (17) présente un trou (21).
